Europäisches Patentamt

European Patent Office

Office européen des brevets

(11) Veröffentlichungsnummer: **0 366 893**
**A1**

## (12) EUROPÄISCHE PATENTANMELDUNG

(21) Anmeldenummer: **89115676.2**

(22) Anmeldetag: **25.08.89**

(51) Int. Cl.5: **C04B 28/14 , //C04B14/04, C04B20/00**

(30) Priorität: **02.11.88 DE 3837136**

(43) Veröffentlichungstag der Anmeldung:
**09.05.90 Patentblatt 90/19**

(84) Benannte Vertragsstaaten:
**AT BE CH DE ES FR GB GR IT LI LU NL SE**

(71) Anmelder: **Rigips GmbH**
**Rühler Strasse**
**D-3452 Bodenwerder(DE)**

(72) Erfinder: **Rennen, Heinz, Dr.**
**Junkergrund 25**
**D-3452 Bodenwerder(DE)**
Erfinder: **Hilscher, Gerald, Chem.-Ing.**
**Schillerstrasse 51**
**D-3280 Bad Pyrmont(DE)**

(74) Vertreter: **Rücker, Wolfgang, Dipl.-Chem.**
**Hubertusstrasse 2**
**D-3000 Hannover 1(DE)**

(54) **Bauplatte für den Brandschutz.**

(57) Beschrieben wird eine Bauplatte für den Brandschutz unter Verwendung von Gips als Bindemittel mit einer Körnung von Wollastonit in Mengen zwischen 5 bis 12 Gew.-%, die Körnung wird dem Gipsbrei zur Herstellung der Gipskartonplatte zugemischt und wird dann wie bekannt verarbeitet.

EP 0 366 893 A1

EP 0 366 893 A1

## Bauplatte für den Brandschutz

Die Erfindung betrifft eine Bauplatte für den Brandschutz unter Verwendung von Gips als Bindemittel. Der Brandschutz ist ein Hauptanliegen der Bauordnung, denn durch das Brandverhalten von Baustoffen kann eine Gefährdung der baulichen Anlagen eintreten.

Eine solche Gefährdung kann sich aus dem Brandverhalten der Baustoffe, der Kombination und Dimensionierung der Bauteile sowie aus der Brandlast der in Gebäuden lagernden Stoffe ergeben. Das Risiko eines Brandes ist dabei nicht nur eine Frage der Brennbarkeit von Baustoffen, sondern auch nichtbrennbare Baustoffe können ein Risiko darstellen, z. B. wenn sie bei Feuereinwirkung zerplatzen oder splittern wie etwa Glas.

Umgekehrt können auch brennbare Stoffe gegenüber Feuereinwirkung verhältnismäßig sicher sein, wenn sie beispielsweise eine gedrungene Form haben. Dicke Eichenholzbalken halten dem Feuerangriff lange stand, während etwa schlanke, nichtbrennbare Stahlprofile bei Überschreiten einer Stahltemperatur von ca. 500 °C die Widerstandsfähigkeit verlieren.

Es sind daher Gipsbauplatten, insbesondere auch Gipskartonplatten für den Brandschutz seit langem bekannt, weil der abgebundene Gips einer Gipskartonplatte etwa 20 % chemisch gebundenes Kristallwasser enthält. Dieses Wasser wird bei stärkerer Erwärmung freigesetzt. Eine 12,5 mm dicke Gipskartonplatte mit einem Gewicht von etwa 15 kg/m² enthält demnach rund drei Liter Wasser pro Quadratmeter. Dieses Wasser muß bis zum Verdampfungspunkt erwärmt und anschließend in Dampf übergeführt werden. Mit der Verdampfung von Wasser ist aber ein sehr hoher Wärmeverbrauch verbunden, der etwa beim Fünffachen jener Wärmemenge liegt, die zur Erwärmung des Wassers bis zum Verdampfungspunkt bei 100 °C benötigt wird.

Auf dieser Tatsache beruht die Schutzwirkung der Gipskartonplatten, denn auf der dem Feuer abgewandten Plattenseite verharrt die Temperatur solange bei etwa 100 °C, bis das Kristallwasser verdampft ist.

Ein Nachteil hat allerdings dieses Verhalten der Gipskartonplatte, nämlich die Einheitlichkeit der Platte geht mit der Zeit verloren, da die Kartonbewahrung schon kurz nach Beginn der Brandeinwirkung verascht und da mit dem Wegfallen der Zugbewährung die Gefahr besteht, daß die brüchigwerdende Gipsplatte zerbricht, so daß dann das Feuer einen Durchgang erhält.

Man hat daher versucht, diese Gefahr dem Brüchigwerden und des Zerfallens der Gipsplatte dadurch zu begegnen, daß man in den Gips Glasfasern eingearbeitet hat. Dadurch wird nun zwar das Verhalten der Gipskartonplatte im Brandfalle besser, aber noch nicht in einem solchen Umfang, daß nicht doch die Gefahr des Brüchigwerdens der Fasern und Zusammenfallens in gewissen Fällen bestünde. (Hanusch, Gipskartonplatten, 1. Aufl., 1978).

Aufgabe der vorliegenden Erfindung ist es daher die Standfestigkeit einer Gipskartonplatte der eingangs erwähnten Art für den Feuerschutz zu verbessern.

Gelöst wird diese Aufgabe nun dadurch, daß der Gipskern der Feuerschutzplatte eine Menge einer Körnung von Wollastonit enthält, vorzugsweise enthält der Gipskern 5 bis 12 Gew.-% Wollastonit, und zwar in einer Körnung, die folgende Zusammensetzung hat:

0 - 45 μm 1 - 9 Gew.-%
45 - 65 μm 2 - 22 Gew.-%
65 - 125 μm 3 - 25 Gew.-%
125 - 250 μm 10 - 24 Gew.-%
250 - 500 μm 49 - 20 Gew.-%
> 500 μm 35 - 0 Gew.-%

Eine bevorzugte Mischung einer Wollastonit-Körnung hat die folgende Zusammensetzung:

0 - 45 μm 5 - 9 Gew.-%
45 - 65 μm 12 - 18 Gew.-%
65 - 125 μm 15 - 20 Gew.-%
125 - 250 μm 10 - 22 Gew.-%
250 - 500 μm 35 - 25 Gew.-%
> - 500 μm 23 - 6 Gew.-% Der Wollastonit wird dem Gipsbrei, vorzugsweise im Gipsmischer, in welchem der Gips mit Wasser und den anderen üblichen Zutaten angemacht wird, zugemischt und dann wie ebenfalls bekannt auf einer Gipskartonplattenmaschine verarbeitet.

Es hat sich überraschender Weise gezeigt, daß eine Gipskartonplatte, die Wollastonit enthält in der erfindungsgemäßen Weise, der herkömmlichen sogenannten Feuerschutzplatte mit Gips als Bindemittel und Glasfasern im Kern beträchtlich überlegen ist.

Bei der Prüfung auf Brandverhalten nach DIN 41 02 hat sich gezeigt, daß die Zeit bis zum Abfall der

2

Platte um ein mehrfaches hinausgezögert werden kann und daß ebenfalls Rißbildungen erst nach einer erheblich längeren Brandeinwirkung auftreten. Auch der Durchhang, den eine normale Gipskartonplatte für den Brandschutz schon nach 26 Minuten zeigt, tritt bei der erfindungsgemäßen Platte mit einem Gehalt von 10 % Wollastonit erst nach 60 Minuten ein.

Die nachfolgende tabellarische Aufstellung zeigt zwei erfindungsgemäße Gipskartonplatten für den Feuerschutz (GKF) in Gegenüberstellung mit einer normalen Gipskartonplatte für den Feuerschutz in bekannter Ausgestaltung.

|  | Plattenabfall | Risse | Durchhang |
|---|---|---|---|
| 1. normale GKF | 35 min. | 14 min. | 26 min. |
| 2. GKF mit 5 % Wollastonit | 54 min. | 41 min. | 30 min. |
| 3. GKF mit 10 % Wollastonit | 100 min. | 50 min. | 60 min. |

Wie aus dieser Gegenüberstellung hervorgeht, ist das Brandverhalten der erfindungsgemäßen Platte in allen Fällen, was Rißbildung, Plattenabfall und Durchhang anbetrifft, der herkömmlichen Platte überlegen. Der Feuerschutz ist also beträchtlich verbessert unter Verwendung von Platten mit der erfindungsgemäßen Zusammensetzung.

Bei allen geprüften Platten handelt es sich um Gipskartonplatten mit einer Dicke von 12,5 mm. Die eingesetzte Körnung an Wollastonit ist für die erfindungsgemäße Feuerschutzplatte ebenfalls entscheidend, und zwar ist ein mittleres Korn mit feinerer Körnung kombiniert, so daß offensichtlich hier aufgrund der besonderen Kristalltracht des Wollastonits eine bessere Verzahnung, sowohl mit dem Gips als auch untereinander eintritt.

Die erfindungsgemäße Feuerschutzplatte kann wie bei Gipskartonplatten üblich in unterschiedlichen Stärken hergestellt werden und ist selbst mit einem hohen Gehalt an Wollastonit und den üblichen bei Gipskartonplatten eingesetzten Zusatzstoffen und -mitteln gut verarbeitbar.

**Ansprüche**

1. Bauplatte für den Brandschutz mit Gips als Bindemittel, **dadurch gekennzeichnet,** daß sie eine Menge einer Körnung von Wollastonit enthält.

2. Bauplatte nach Anspruch 1, **dadurch gekennzeichnet,** daß die Menge der Wollastonit-Körnung 5 bis 12 Gew.-% beträgt.

3. Bauplatte nach Anspruch 1 und 2, **dadurch gekennzeichnet,** daß die Wollastonit-Körnung folgende Kornfraktion enthält:

0 - 45 μm 1 - 9 Gew.-%

45 - 65 μm 2 - 22 Gew.-%

65 - 125 μm 3 - 25 Gew.-%

125 - 250 μm 10 - 24 Gew.-%

250 - 500 μm 49 - 20 Gew.-%

> - 500 μm 35 - 0 Gew.-%

4. Bauplatte nach Anspruch 1 und 2, **dadurch gekennzeichnet,** daß die Wollastonit-Körnung vorzugsweise folgende Zusammensetzung hat:

0 - 45 μm 5 - 9 Gew.-%

45 - 65 μm 12 - 18 Gew.-%

65 - 125 μm 15 - 20 Gew.-%

125 - 250 μm 10 - 22 Gew.-%

250 - 500 μm 35 - 25 Gew.-%

> - 500 μm 23 - 6 Gew.-%

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | US-A-4 647 486 (M. H. ALI)<br>* Ansprüche 1,7 *<br>--- | 1,2 | C 04 B 28/14 //<br>C 04 B 14/04<br>C 04 B 20/00 |
| A | US-A-2 198 885 (M. R. PRICE)<br>* Anspruch 1 *<br>--- | 1 | |
| A | US-A-3 376 147 (R. M. DEAN)<br>* Ansprüche 1,6 *<br>--- | 1-4 | |
| A | US-A-3 454 456 (G.S. WILLEY)<br>* Ansprüche 1,6 *<br>----- | 3,4 | |
| | | | **RECHERCHIERTE SACHGEBIETE (Int. Cl.5)**<br><br>C 04 B 28/00<br>B 32 B 13/00 |

Der vorliegende Recherchenbericht wurde für alle Patentansprüche erstellt

| Recherchenort | Abschlußdatum der Recherche | Prüfer |
|---|---|---|
| BERLIN | 26-01-1990 | KESTEN W.G. |